# DEMANDE DE BREVET EUROPEEN

(11) **EP 1 408 660 A1**
(43) Date de publication de la demande: **14.04.2004**
(21) Numéro de dépôt: 03292325.2
(22) Date de dépôt: 23.09.2003
(51) Int. Cl.: H04L 12/56

(54) **Support actif de réservation de ressources dans un reseau de communication**

(30) Priorité: 03.10.2002 FR 0212244
(71) Demandeur: ALCATEL, 75008 Paris (FR)
(72) Inventeur: El Mghazly, Yacine, 94250 Gentilly (FR); Marce, Olivier, 91300n Massy (FR); Clevy, Laurent, 28000 Chartres (FR)
(74) Mandataire: Fournier, Michel Robert Marie

(57) **Abrégé**

L'invention propose un procédé de réservation de ressources dans un réseau de communication par paquets, de préférence un réseau au protocole IP, comprenant les étapes de :
- a) émission sur le réseau d'un paquet actif contenant une requête en réservation de ressources pour un flux de données actif ;
- b) réception dudit paquet par un noeud actif du réseau ; et
- c) réservation de ressources du noeud en fonction de ladite requête.

L'invention propose aussi un noeud actif de réseau de communication par paquets, notamment un routeur actif IP, réservant des ressources pour le traitement des données d'un flux de données actif en fonction d'une requête en réservation de ressources pour ledit flux de données actif contenue dans un paquet actif reçu par le noeud.

## Description

L'invention concerne la réservation de ressources dans des routeurs d'un réseau de communication par paquets, notamment un réseau au protocole IP.

On appelle réseau actif un réseau comprenant des noeuds ou routeurs dits actifs, c'est-à-dire capables d'être programmés ou configurés à distance pour pouvoir modifier dynamiquement les traitements spécifiques sur les données traversant le réseau. Les routeurs reçoivent dans ce cas des paquets appropriés pouvant comprendre des commandes, un code ou un programme à exécuter par le routeur concerné, ainsi que des informations associées. Les paquets transportant ces commandes, informations, code ou programme destinés à un noeud actif sont ici appelés « paquets actifs », par opposition aux autres paquets, appelés « paquets passifs », qui ne contiennent par de données liées à un environnement d'exécution particulier des noeuds actifs.

Certaines des données contenues dans les paquets actifs peuvent soit constituer directement un code exécutable par les noeuds actifs, soit identifier un serveur et un code téléchargeable par les noeuds à partir du serveur indiqué.

Les paquets actifs et passifs ont des attributs différents de sorte que tout noeud actif puisse reconnaître si un paquet reçu est actif ou non. Il existe différentes méthodes pour rendre un paquet actif. S'agissant d'un réseau au protocole IP, une première méthode consiste à rendre le paquet actif en incluant un marqueur dans son entête. On peut pour cela définir une option réservée du paquet IP. Selon une autre méthode, on utilise un des champs FLOW LABEL du protocole IPv6 pour marquer le paquet comme actif. On peut notamment donner une valeur prédéterminée à un tel champ du paquet actif contenant une requête en réservation de ressources. Selon encore une autre méthode, un marqueur d'un label MPLS du paquet indique que le paquet est actif. L'utilisation d'un marqueur inclus dans un label MPLS permet au routeur de déterminer plus rapidement si le paquet est actif: Le même marqueur peut être utilisé dans des labels MPLS des paquets du flux à ressources réservées. Par conséquent, un routeur actif peut ainsi déterminer le caractère actif d'un paquet qu'il reçoit en vérifiant la présence du marqueur dans le paquet.

Un réseau peut toutefois comporter à la fois des noeuds actifs et des noeuds passifs, c'est-à-dire non conçus pour prendre en compte les informations des paquets actifs. Un tel réseau est alors appelé "réseau actif hybride" ou plus simplement "réseau hybride".

Généralement, les critères de routage des paquets actifs dans les réseaux hybrides sont différents de ceux des paquets passifs. En effet, les paquets actifs doivent être routés en priorité vers les routeurs capables de prendre en compte les paquets actifs, c'est-à-dire vers les routeurs actifs. Ce type de routage est par exemple décrit dans l'article « Optimised Routing in Hybrid Active Networks » présenté lors de la conférence internationale « OPENARCH 2002 ».

On appelle flux de données actif ou flux actif un flux de paquets relatifs à une même application et requérant par conséquent une cohérence de traitement spécifique par les routeurs concernés. Un flux actif est identifié par le fait que les paquets constituant ce flux sont des paquets rendus actifs par l'une ou l'autre des méthodes mentionnées précédemment, ou par tout autre méthode appropriée. Un flux de données actif est classiquement traité dans un même environnement d'exécution, par une même instance d'un programme lancé dans un routeur traversé par le flux. La même instance de programme est utilisée afin d'obtenir un traitement cohérent des différents paquets du flux actif. Le traitement peut par exemple consister à transcoder un flux de vidéo sur IP d'un format vers un autre par la même instance de programme. La même instance de programme doit alors être utilisée pour réaliser le transcodage des trames du fait que le traitement des trames vidéo du flux peut varier en fonction du contexte imposé par des trames précédentes.

Il est encore connu d'établir une qualité de service -aussi appelée QoS- des transmissions sur un réseau de communication en réservant des ressources pour des flux de données spécifiques traversant un réseau. Un protocole de réservation de ressource dénommé « Beagle » est décrit dans le document « Technical Report CMU-CS-98-150 » publié en Juillet 1998 par la Carneggie Mellon University aux Etats-Unis. Ce protocole est utilisé pour réserver des ressources d'exécution pour des flux actifs tout au long des chemins que suivront ensuite les paquets de ces flux à traiter par les noeuds actifs. La réservation de ressources d'exécution est effectuée par émission d'un paquet suivant ce protocole et ce paquet contient des commandes de réservation de ressources placées dans sa zone utile (appelée « payload » en anglais). Lorsqu'ils sont traversés par un paquet de réservation au protocole Beagle, les routeurs actifs le reconnaissent en raison du numéro de protocole inscrit dans celui-ci. Des ressources d'exécution correspondantes sont alors réservées dans les routeurs actifs destinataires de ces commandes.

Ce procédé présente cependant des inconvénients pour les réseaux hybrides. En effet, les paquets au protocole Beagle contenant les commandes de réservation sont routés dans le réseau en qualité de paquets passifs et sont donc routés à travers le réseau comme un paquet passif. Ils passent donc indifféremment par des routeurs actifs et des routeurs passifs. Par conséquent, les paquets contenant les commandes de réservation peuvent éventuellement ne traverser que des routeurs passifs, et par voie de conséquence, ils ne sont traités par aucun routeur actif du réseau. La réservation de ressources souhaitée n'a donc pas lieu dans ce cas.

De plus, les paquets contenant les commandes de réservation peuvent emprunter un trajet dans le réseau différent du trajet emprunté par les paquets des flux actifs pour lesquels ils sont sensés effectuer la réservation de ressources. En effet, le routage des paquets actifs est généralement différent du routage des paquets passifs à travers le réseau. Ainsi, les commandes de réservation peuvent être inutilement mises en oeuvre par des routeurs actifs non traversés par les paquets du flux actif correspondant et au contraire ils peuvent ne pas être fournies aux routeurs actifs effectivement traversés par les paquets du flux actif correspondant.

L'invention a pour but de palier au moins partiellement ces inconvénients.

A cette fin, l'invention propose un procédé de réservation de ressources dans un réseau de communication par paquets, de préférence un réseau au protocole IP, ce réseau étant un réseau hybride comportant à la fois des noeuds actifs et des noeuds passifs, les noeuds actifs étant seuls aptes à prendre en compte des paquets dits actifs, c'est-à-dire contenant des informations liées à une environnement d'exécution correspondante de ces noeuds actifs, un flux de données actif étant un ensemble de paquets actifs devant être pris en compte par un même environnement d'exécution, ledit procédé comprenant les étapes de :
- a) émission sur le réseau d'un paquet de réservation contenant une requête en réservation de ressources constitutives d'un environnement d'exécution pour un flux de données actif associé;
- b) réception dudit paquet de réservation par un noeud actif du réseau ; et
- c) réservation de ressources du noeud en fonction de ladite requête,
ledit procédé étant caractérisé en ce que ledit paquet de réservation est un paquet actif.

Dans un mode de réalisation préféré, ledit paquet de réservation est au format du protocole RSVP. Ledit paquet peut être avantageusement du type PATH du protocole RSVP.

Dans un autre mode de réalisation préféré, le paquet de réservation comprend un identifiant dudit flux de données actif.

Dans encore un autre mode de réalisation préféré du procédé, le paquet de réservation est prévu pour contenir des paramètres de traitement de données contenues dans ledit flux de données actif associé, ce traitement étant un code exécutable par un noeud actif du réseau, et en ce qu'en cas de présence de ces paramètres de traitement l'étape b) est suivie :
- b1) d'une étape de chargement par ledit noeud actif dudit code exécutable correspondant; et
- b2) d'une étape d'exécution dudit code par ledit noeud actif.

Ces paramètres de traitement peuvent constituer directement le code exécutable par le noeud actif ou, selon une variante, identifier un serveur et un code téléchargeable par le noeud à partir de ce serveur.

Dans un mode de réalisation préféré, le procédé comprend après l'étape b1), une étape de :
- b3) envoi sur le réseau par ledit noeud d'une confirmation de chargement dudit code exécutable.

L'invention propose aussi un noeud actif de réseau de communication par paquets, notamment un routeur actif IP, pour la mise en oeuvre du procédé exposé ci-dessus. Ce noeud est prévu pour détecter si un paquet actif reçu est un paquet de réservation et pour réserver des ressources correspondantes pour le traitement des données d'un flux de données actif en fonction d'une requête en réservation de ressources pour ledit flux de données actif et contenue dans ledit paquet actif de réservation.

L'invention est maintenant décrite plus en détails dans la description qui suit.

Selon l'invention, on émet sur un réseau de communication par paquets, un paquet actif contenant une requête en réservation de ressources pour un flux de données actif. Lorsque le paquet est reçu par un noeud actif du réseau, ce noeud réserve les ressources en fonction de la requête, du moins si la requête en réservation concerne ce noeud.

L'invention s'applique avantageusement aux réseaux de communication au protocole IP (« Internet Protocol ») auquel cas les noeuds sont appelés routeurs. Dans ce cas, on émet un paquet IP actif contenant une requête en réservation de ressources pour un flux de données actif. Lorsque ce paquet est reçu par un routeur actif du réseau, ce routeur réserve les ressources en fonction de la requête, du moins si la requête en réservation concerne ce noeud.

Ainsi, lorsque un terminal émetteur émet un flux de données vers un terminal destinataire via le réseau, il peut préalablement envoyé un paquet actif contenant la requête en réservation de ressources. Bien entendu, le paquet actif contenant la requête en réservation peut aussi être émis par un routeur du réseau agissant alors pour le compte de ce terminal. Le paquet contenant la requête en réservation de ressources étant actif, il emprunte le même trajet dans le réseau que les paquets du flux actif émis ultérieurement pour lequel la requête en réservation est émise. Ainsi, les paquets du flux actif concerné passent par des routeurs actifs ayant interprété préalablement la requête en réservation et ayant donc réservé les ressources souhaitées pour ces paquets.

Le paquet contenant la requête en réservation comprend un identifiant des paquets du flux actif pour lequel des ressources doivent être réservées. L'identifiant peut notamment comprendre une référence :
- à un protocole utilisé par ces paquets actifs,
- à un émetteur ou à un destinataire des paquets du flux actif, étant précisé qu'il peut s'agir d'un terminal, mais aussi par exemple d'un routeur du réseau, ou
- à tout autre paramètre approprié.

Ce paquet contient aussi des données identifiant les ressources à réserver par le ou les routeur(s) concernés. Ces ressources qui définissent un environnement d'exécution peuvent comprendre un espace mémoire alloué dans le routeur pour le flux actif correspondant ou encore une taille de bande passante pour ce flux actif. Elles peuvent aussi comprendre - alternativement ou en plus - l'allocation d'un temps de traitement de l'unité de traitement du routeur ou encore l'affectation d'un coprocesseur donné du routeur au traitement du flux actif concerné lorsque le routeur comprend plusieurs processeurs. Le paquet contenant la requête peut contenir des paramètres de réservation de ressources tels que des spécifications des routeurs pour que seuls les routeurs actifs présentant ces spécifications mettent en oeuvre la requête en réservation. Ainsi, le paquet contenant la requête de réservation peut spécifier que la réservation de ressources n'est à effectuer que par les routeurs actifs d'un type déterminé.

A côté de la définition des ressources à réserver, le paquet contenant la requête peut également présenter des paramètres de traitement des données du flux actif tels qu'une commande définissant des conditions d'utilisation des ressources par un routeur actif. Ainsi, la commande peut spécifier une durée maximale pour effectuer le traitement du flux actif par le routeur actif. Au delà de cette durée, le routeur considère qu'une erreur s'est produite durant le traitement ou la transmission du flux actif et effectue en conséquence des tâches de traitement d'erreur telle que l'émission d'un message d'erreur vers un émetteur du flux.

Un autre exemple de paramètre de traitement des données du flux actif est une commande définissant les traitements des paquets actifs à effectuer par un routeur actif, autrement dit la commande identifie le code à exécuter par le routeur actif. Le code à exécuter peut être présent en permanence dans le routeur. Une variante avantageuse consiste à faire télécharger le code par le routeur comme nous le décrirons plus loin.

Plus généralement, le paquet contenant la requête peut comprendre toute sorte d'information ou de commande utile concernant les codes de traitement des routeurs ou autre qui peuvent par exemple être placées dans des extensions des champs RSPEC et TSPEC d'un paquet PATH au format du protocole RSVP.

La requête en réservation avec les éventuels paramètres précités, contenu dans un paquet actif selon l'invention peut être une requête commune à l'ensemble des routeurs actifs du réseau, c'est-à-dire que chacun des routeurs actifs met en oeuvre la même réservation de ressources.

En variante, la requête en réservation et/ou ces paramètres précités contenus dans un paquet actif selon l'invention peut aussi être destinée à un ou plusieurs routeurs actifs spécifiques du réseau. Dans ce cas, il peut être prévu des requêtes en réservation et/ou des paramètres différents pour différents routeurs actifs. Ainsi, le paquet actif contenant la requête en réservation de ressources peut contenir différents types et/ou valeurs de ressources à réserver, chacune étant mis en oeuvre par d'autres routeurs actifs du réseau. Une telle distinction des ressources à réserver peut notamment être liée à la localisation des routeurs actifs dans le réseau. A titre d'exemple, le traitement des paquets du flux actif pour lequel la réservation de ressources est faite, peut comprendre l'encryptage des paquets par le routeur actif à l'entrée du réseau et le décryptage par le routeur actif à la sortie du réseau. Par conséquent, il est avantageux de réaliser des requêtes en réservation de ressources comprenant des types de ressources et des paramètres de ressources et/ou de traitement en fonction du type de routeur, de sa localisation dans le réseau ou du chemin traversé dans le réseau, ou de tout autre paramètre dépendant du routeur.

Le paquet contenant la requête est de préférence au format du protocole RSVP. Ainsi, le paquet contenant la requête peut être interprété par les routeurs interprétant ce protocole. Il n'est alors pas indispensable de changer l'ensemble des routeurs pour effectuer une réservation de ressources sur le réseau. Les applications de traitement de protocoles RSVP doivent éventuellement être mises à jour pour prendre en compte de nouveaux champs définis dans des extensions de protocole RSVP. Les paquets actifs émis dans un protocole RSVP sont routés normalement par les routeurs passifs. L'utilisation de routeurs passifs ne perturbe donc pas leur transmission sur le réseau de communication.

Le paquet contenant la requête est de préférence un paquet de type PATH du protocole RSVP choisi. Dans le protocole RSVP, un paquet PATH est un paquet contenant une requête en réservation de ressources.

Le routage du paquet contenant la requête et des paquets actifs correspondants est de préférence modifié pour traverser des routeurs actifs en priorité. On peut ainsi prévoir que les routeurs actifs présentent une table de routage spécifique aux paquets actifs et une autre table de routage spécifique aux paquets passifs. La table de routage des paquets actifs peut alors avantageusement être prévue pour router ces paquets uniquement - ou du moins en priorité - vers des routeurs actifs. Le traitement des paquets actifs est ainsi optimisé car les paquets actifs traversent en priorité des routeurs actifs susceptibles de les traiter de manière spécifique. Le traitement des paquets peut par exemple être modifié en fonction des conditions de transmission du réseau. Le traitement d'un flux de vidéo sur IP peut notamment consister à transcoder les paquets pour réduire la qualité d'image lorsque les conditions de transmission sur le réseau se détériorent.

On peut également prévoir que suite à la réception d'un paquet actif contenant une requête en réservation de ressources, le routeur actif du réseau charge un ou plusieurs codes que le routeur exécutera. Un tel code à exécuter peut notamment servir à traiter spécifiquement le flux de données pour lequel des ressources sont réservées dans le routeur. Le chargement d'un tel code peut être effectué suivant plusieurs alternatives. Le code peut soit être inclus dans le paquet contenant la requête, soit être inclus dans des paquets du flux de données à ressources réservées, soit être mis à disposition sur un serveur en communication avec le routeur actif. Dans le cas où le code est mis à disposition sur un serveur, le paquet contenant la requête ou un paquet du flux de données à ressources réservées peut contenir l'adresse du serveur et un identifiant du code à charger. Le routeur actif peut alors envoyer une requête en émission du code au serveur. Il est avantageux que le routeur envoie à l'émetteur du paquet actif contenant la requête en réservation un message de confirmation après qu'il ait complètement téléchargé le code à exécuter. Ainsi, l'émetteur sait que le routeur actif est prêt à exécuter le code pour le flux actif concerné et donc l'émetteur peut en réponse lui envoyer les paquets du flux actif correspondant.

Bien entendu, la présente invention n'est pas limitée aux exemples et modes de réalisation décrits et représentés, mais elle est susceptible de nombreuses variantes accessibles à l'homme de l'art.

## Revendications

1. Un procédé de réservation de ressources dans un réseau de communication par paquets, de préférence un réseau au protocole IP, ce réseau étant un réseau hybride comportant à la fois des noeuds actifs et des noeuds passifs, les noeuds actifs étant seuls aptes à prendre en compte des paquets dits actifs, c'est-à-dire contenant des informations liées à un environnement d'exécution correspondant de ces noeuds actifs, un flux de données actif étant un ensemble de paquets actifs devant être pris en compte par un même environnement d'exécution, ledit procédé comprenant les étapes de :
- a) émission sur le réseau d'un paquet de réservation contenant une requête en réservation de ressources constitutives d'un environnement d'exécution pour un flux de données actif associé;
- b) réception dudit paquet de réservation par un noeud actif du réseau ; et
- c) réservation de ressources du noeud en fonction de ladite requête,
ledit procédé étant **caractérisé en ce que** ledit paquet de réservation est un paquet actif.

2. Le procédé de la revendication 1, **caractérisé en ce que** ledit paquet de réservation est au format du protocole RSVP.

3. Le procédé de la revendication 1 ou 2, **caractérisé en ce que** ledit paquet de réservation est du type PATH du protocole RSVP.

4. Le procédé de l'une des revendications précédentes, **caractérisé en ce que** le paquet en réservation comprend un identifiant dudit flux de données actif.

5. Le procédé de l'une des revendications précédentes, **caractérisé en ce que** ledit paquet de réservation est prévu pour contenir des paramètres de traitement de données contenues dans ledit flux de données actif associé, ce traitement étant un code exécutable par un noeud actif du réseau, et **en ce qu'**en cas de présence de ces paramètres de traitement l'étape b) est suivie :
- b1) d'une étape de chargement par ledit noeud actif dudit code exécutable correspondant; et
- b2) d'une étape d'exécution dudit code par ledit noeud actif.

6. Le procédé de la revendication 5, **caractérisé en ce que** lesdits paramètres de traitement constituent ledit code exécutable par ledit noeud actif.

7. Le procédé de la revendication 5, **caractérisé en ce que** lesdits paramètres de traitement identifient un serveur et un code téléchargeable par ledit noeud à partir dudit serveur.

8. Le procédé de l'une quelconque des revendications 5 à 7, **caractérisé en ce qu'**il comprend après l'étape b1), une étape de :
- b3) envoi sur le réseau par ledit noeud d'une confirmation de chargement dudit code exécutable.

9. Un noeud actif de réseau de communication par paquets, notamment un routeur actif IP, pour la mise en oeuvre du procédé selon l'une des revendications 1 à 8, **caractérisé en ce qu'**il est prévu pour détecter si un paquet actif reçu est un paquet de réservation et pour réserver des ressources correspondantes pour le traitement des données d'un flux de données actif en fonction d'une requête en réservation de ressources pour ledit flux de données actif et contenue dans ledit paquet actif de réservation.
